Europäisches Patentamt

European Patent Office

Office européen des brevets

(11) Veröffentlichungsnummer: **0 213 452**
**A2**

(12) **EUROPÄISCHE PATENTANMELDUNG**

(21) Anmeldenummer: 86110968.4

(51) Int. Cl.⁴: **B 60 C 11/12**

(22) Anmeldetag: 08.08.86

(30) Priorität: 30.08.85 DE 3531047

(43) Veröffentlichungstag der Anmeldung:
**11.03.87** Patentblatt **87/11**

(84) Benannte Vertragsstaaten:
**DE FR GB IT LU SE**

(71) Anmelder: **UNIROYAL ENGLEBERT Reifen GmbH**
**Hüttenstrasse 7**
**D-5100 Aachen(DE)**

(72) Erfinder: **Poqué, Dionysius Josef, Dipl.-Ing.**
**Meischenfeld 14**
**D-5100 Aachen(DE)**

(72) Erfinder: **Vögler, Hans Jürgen, Dipl.-Ing.**
**Roggenweg 6**
**D-5120 Herzogenrath(DE)**

(72) Erfinder: **Gerresheim, Manfred, Dr.-Ing.**
**Martin-Luther-King Strasse 42**
**D-5102 Würselen(DE)**

(72) Erfinder: **Sommer, Jürgen, Dr.-Ing.**
**Wirtzstrasse 19**
**D-5100 Aachen(DE)**

(54) **Fahrzeugluftreifen.**

(57) Die Erfindung betrifft die Ausbildung von Lamellenfeineinschnitten in Laufflächenprofilen an Fahrzeugluftreifen. Zur Verringerung der Reifenlärmemission wird der Lamellenfeineinschnitt wenigstens im Mündungsbereich an der Profiloberfläche erweitert ausgebildet. In der bervorzugten V-Form des Lamellenquerschnitts können gerade oder gebogene Einschnittwandungen vorliegen. Durch die Volumenvergrößerung wird der Wert des Druckquotienten: erhöhter Druck $P_K$ im Kompressionszustand zu dem Druck $P_o$ im Ausgangszustand kleiner und dadurch die erzeugte Schallenergie verringert.

Fig.2

UNIROYAL ENGLEBERT
Reifen GmbH

P146 EP

Fahrzeugluftreifen

Die Erfindung bezieht sich auf einen Fahrzeugluftreifen mit einem profilierten Laufstreifen, der mit Lamellenfeineinschnitten versehen ist. Diese erstrecken sich von der Laufstreifenoberfläche radial oder schräg geneigt in die Profilblöcke oder- rippen hinein. Bekannte Lamellenfeineinschnitte sind mehrere Zehntel Millimeter breit. Sie weisen parallele Einschnittkanten auf und reichen bis zu einer Tiefe von annähernd der Profiltiefe in dem Laufstreifen.

Lamellenfeineinschnitte können umfangs- , quer- oder schrägorientiert zu der Reifenmittenebene angeordnet sein. Dies ist abhängig von der Form und Anordnung der Profilelemente, die das Laufflächenprofil bilden.

0213452
P146 EP

Lamellenfeineinschnitte dienen zur erhöhten Griffigkeit und verbesserten Flexibilität des Laufflächenprofils. Die bekannten Feineinschnitte weisen eine lichte Weite von etwa 8 bis 10% der Profiltiefe auf und sind parallel gestaltet. Der Feinschnitt schließt sich beim Einlauf des Profils in die Bodenkontaktfläche und öffnet sich beim Auslauf des Profils aus der Bodenkontaktfläche. Das im Feineinschnitt sich befindende Luftvolumen stellt aufgrund der Reifenbewegung eine mit hoher Frequenz in Schwingungen versetzte Luftsäule dar.

Wenn sich der Feineinschnitt schließt, wird dieses Luftvolumen verkleinert und der Druck steigt an. Sobald sich der Feineinschnitt wieder öffnet, strömt dieses Luftvolumen infolge des Luftkompressionseffekts mit einem hochfrequenten, wesentlich mehr als 1000 Hz betragenden Zischgeräusch aus dem Feineinschnitt aus. Dieses Geräusch ist ein Teil der gesamten Reifenlärmemission.

Ziel der Erfindung ist es, dieses Zischgeräusch wesentlich zu mindern. Es ist bereits ein Vorschlag bekannt, einen Druckausgleich durch einen zusätzlichen, an den Lamellenfeineinschnitt angeschlossenen Kanal herbeizuführen. In zahlreichen Fällen sind die Profilblöcke oder- rippen jedoch nicht geeignet, daß ein solcher Druckausgleichskanal vorgesehen werden kann. Das Ziel der Erfindung ist daher auf andere Weise zu verwirklichen.

Nach der Formel für ideale Gase ergibt sich bei konstanten Temperaturverhältnissen der Gleichgewichtszustand $V_0 \cdot P_0 = V_K \cdot P_K$, wobei $V_0$ das Volumen im Ausgangszustand, $P_0$ der Druck im Ausgangszustand, $V_K$ das verkleinerte Volumen im Kompressionszustand und $P_K$ der erhöhte Druck im Kompressionszustand bedeuten.

P146 EP **0213452**

Bei dem bekannten Lamellenfeineinschnitt in paralleler Gestaltung ist der Druckquotient $P_K/P_0$ hoch, da das Volumen $V_0$ verhältnismäßig klein ist. Der Druckquotient ist dabei entscheidend für die aufgebrachte Schallenergie. Daher soll nach dem Grundgedanken der Druckquotient durch eine Volumenänderung günstig beeinflußt werden.

Die Aufgabe der Erfindung besteht darin, daß eine Vergrößerung des Ausgangsvolumens $V_0$ des Lamellenfeineinschnitts durch eine günstige Querschnittgestaltung der Lamellenöffnung erreicht werden soll.

Erfindungsgemäß wird diese Aufgabe dadurch gelöst, daß der Lamellenfeineinschnitt eine zur Oberfläche des Laufstreifens kontinuierlich erweiterte Öffnung aufweist, die wenigstens im Mündungsabschnitt des Feineinschnitts vorliegt. Die erweiterte Öffnungsbreite soll dabei mindestens 1,5fach größer sein als die normale Breite des Feineinschnitts, die etwa die 0,05 bis 0,15fache Größe der Profiltiefe aufweist. Eine bevorzugte Form der erweiterten Öffnung ist die V-Form.

Durch die Öffnungserweiterung wird das Ausgangsvolumen $V_0$ um ein V vergrößert. Durch die Volumenvergrößerung wird eine Reduzierung des Druckquotienten und damit eine Verringerung der erzeugten Schallenergie erreicht. Dies wirkt sich insbesondere durch eine Reduzierung der hohen Frequenzanteile aus.

Die kontinuierliche Öffnungserweiterung hat den Vorteil, daß sich der Feineinschnitt beim Öffnen als eine die Strömung beruhigende Zone auswirkt, u.z. insofern als sie ein weniger turbulentes, gleichmäßigeres Ausströmen der Luft im Vergleich zur bekannten Querschnittsgestaltung erlaubt.

Nach Merkmalen der Erfindung kann die Öffnungserweiterung einseitig oder beidseitig an dem Feineinschnitt ausgebildet sein, indem nur eine Wand an der Mündung oder beide Wände abgeschrägt vorliegen, vergleichbar einer trichterförmigen Öffnung. Dieser Trichterquerschnitt kann gerade oder gekrümmte Wände aufweisen. Er kann eine Erweiterungstiefe von kurzer Länge, mindestens 0,1facher Profiltiefe aufweisen, oder nahezu bis zum Feineinschnittgrund, mit etwa 0,9facher Profiltiefe, reichen. Bei gekrümmt ausgebildeter Feineinschnittwand kann der Krümmungsradius eine 0,2 bis 1000fach Profiltiefe betragende Länge aufweisen. Diese Konstruktionsanweisungen richten sich danach, ob der Lamellenfeineinschnitt quer oder längs oder schräg zur Reifenlaufrichtung, ob er einzeln oder in Gruppen an einem laufflächenmittigen Profilblock oder einer Rippe oder ob er in dem Reifenschulterprofil vorgesehen ist. In den starkem Verschleiß ausgesetzten Profilzonen wird die Öffnungserweiterung nahezu bis zum Feineinschnittgrund reichen, da dadurch eine Volumenvergrößerung gewährleistet ist, wenn das Profil durch Abrieb bereits an Profilhöhe verloren hat.

An Hand der Zeichnung ist die Erfindung in bevorzugten Ausführungsbeispielen dargestellt und erläutert. Es zeigt

Fig. 1 eine Reifenlauffläche (Teilausschnitt) mit Lamellenfeineinschnitten,

Fig. 2 eine Einzelheit eines Lamellenfeineinschnitts für den Druckausgleich in vergrößerter Darstellung,

Fig. 3a bis f Ausführungsformen des Querschnitts des Lamellenfeineinschnitts,

Fig. 4a bis c Ausführungsformen der Feineinschnittanordnung.

P146 EP

0213452

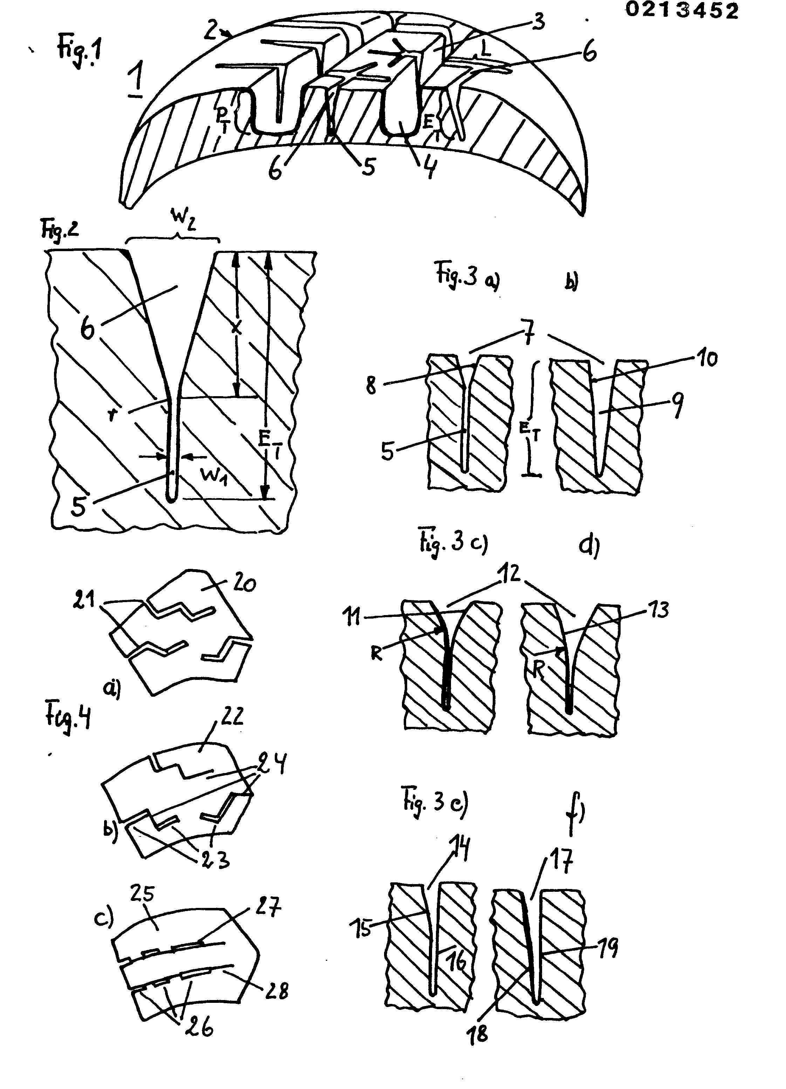

Der Profillaufstreifen 2 eines Fahrzeugluftreifens 1 gemäß Fig. 1 besteht aus Profilelementen 3 und diese unterteilenden Profilrillen 4 und weist Lamellenfeineinschnitte 5 auf. Die Profiltiefe ist mit $P_T$ und die Feineinschnittiefe ist mit $E_T$ angegeben. Die Feineinschnitte können einzeln oder nahe zueinander in Gruppen, sie können quer oder schräg zur Reifenlaufrichtung oder in Laufrichtung angeordnet sein. Sie sind schlitzförmig ausgebildet, teilweise verhältnismäßig lang, und in der Regel enden sie blind im Profilelement. Dieser Lamellenfeineinschnitt schließt sich beim Einlauf in die Bodenkontaktfläche und öffnet sich beim Auslauf aus der Bodenkontaktfläche. Beim Schließen werden die Feineinschnittwände zusammengepreßt und der Druck des eingeschlossenen Luftvolumens steigt an. Beim Austritt der Luft wird durch Druckausgleich eine Geräuschreduzierung und eine turbulenzarme Ausströmung der Luft aufgrund der folgend beschriebenen Querschnittsgestaltung des Feineinschnitts erzielt. Sie besteht darin, daß der Feineinschnitt 5 eine mindestens im Mündungsbereich vorliegende ausreichende Öffnungserweiterung 6 aufweist.

Ein Druckausgleich - Lamellenfeineinschnitt ist in Fig. 2 vergrößert dargestellt. Die Öffnung 6 ist trichterartig ausgebildet. Die größte Weite $W_2$ kann eine rd 0,1 bis 0,5fache Größe der Profiltiefe $P_T$ aufweisen. Die v-förmig vergrößerte Öffnung ist mindestens bis zu einer Tiefe X vorgesehen und kann bis zur Einschnittiefe $E_T$ reichen. Die Tiefe X kann die 0,1 bis 0,9fache Größe der Profiltiefe aufweisen.

Die Öffnungswände sind geradlinig oder gekrümmt ausgebildet. Der Radius R kann 0,2 bis 1000fache Profiltiefgröße aufweisen. Die Breite $W_1$ des Lamellenfeineinschnitts 5 ist schmal und liegt in der Größe der 0,05 bis 0,15fachen Profiltiefe vor. Der Übergang vom Schlitz 5 zur Öffnung ist gerundet; vgl. r als Übergangsradius.

Durch die Querschnittserweiterung 6 verfügt der Lamellenfeineinschnitt über ein vergrößertes Volumen, das sich günstig auf die Frequenzverringung auswirkt. Die Ausströmkontur des Lamellenfeineinschnitts ist für das ausströmende, unter Druck stehende Luftvolumen günstig, weil das Ausströmen gleichmäßiger und weniger turbulent erfolgt im Vergleich zur bekannten Lamelle ohne Mündungserweiterung. Dadurch wird das sonst übliche hochfrequente Zischgeräusch wesentlich reduziert.

In der Fig. 3 sind bevorzugte Ausführungsformen des Druckausgleich-Lamellenfeineinschnitts 6 dargestellt. Es zeigt Fig. 3a einen Feineinschnitt mit vergrößerter Öffnung 7, bei der die Einschnittwände 8 im Mündungsbereich gerade ausgebildet sind. Diese Öffnung kann symmetrisch oder unsymmetrisch ausgebildet sein. Die Feineinschnitte werden beim Ausformen der Lauffläche durch Bleche in der Vukanisierform erzeugt. Das Blech für den Druckausgleichfeineinschnitt ist am nicht freistehenden Ende verdickt und unterliegt bei der Herstellung Fertigungstoreranzen. Sie können Unsymmetrien zur Folge haben.

In Fig. 3b ist ein auf der gesamten Einschnittiefe $E_T$ V-förmig ausgebildeter Lamellenfeineinschnitt 9 mit geraden, trichterförmig geneigten Wänden 10 dargestellt. Dieser Feineinschnitt wird bevorzugt an Profilelementen mit höherem Verschleiß angewandt.

In Fig. 3c und d sind Feineinschnitte 12 dargestellt, die gekrümmte, V-förmigen Querschnitt bildende Wände 11 bzw. 13 aufweisen. Diese Mündungserweiterung ergibt einen strömungsbegünstigten Ausströmquerschnitt.

In Fig. 3e ist eine einseitig erweitere Öffnung 14 dargestellt, bei der eine Wand 15 geneigt ist, während die andere Wand 16 radial gerade bis zur Mündung verläuft.

P146 EP

**0213452**

In Fig. 3 f ist eine bis zum Einschnittgrund reichende einseitig erweiterte Öffnung 17 gezeigt, bei der die Wand 18 leicht gerundet schräg verläuft, während die gegenüberliegende Wand 19 die radiale gerade Kontur beibehält.

Fig. 4 zeigt verschiedene Formen der Anordnung des Lamellenfeineinschnitts: Fig. 4a einen Profilblock 20 in Aufsicht mit Druckausgleichslamellen 21. Fig. 4b einen Profilblock 22 mit Teilen 23 als Druckausgleichlamelle und Teilen 24 als normale Schmallamelle; Fig. 4c einen Profilblock 25 mit Teilen 26, 27 als Druckausgleichlamelle und Teilen 28 als Normallamelle. Die Druckausgleichlamelle weist eine erweiterte Öffnung auf, während die Normallamelle im Querschnitt nur aus dem Schmalschlitz 5 besteht.

UNIROYAL ENGLEBERT
Reifen GmbH

Patentansprüche

1. Fahrzeugluftreifen mit in einem profilierten Laufstreifen ausgebildeten Lamellenfeineinschnitten in einer bestimmten, jedoch
wählbaren Schlitzbreite und einer der Profiltiefe nahezu entsprechenden Schlitztiefe, wobei sich der Feineinschnitt von der
Oberfläche des Laufstreifens radial oder schräg geneigt bis in den
Profilblock oder - rippe erstreckt, dadurch gekennzeichnet, daß
der Lamellenfeineinschnitt (5) eine zur Oberfläche des Laufstreifens hin kontinuierlich erweiterte Öffnung (5) aufweist, die
wenigstens im Mündungsabschnitt vorliegt und in der erweiterten
Breite $(W_2)$ mindestens 1,5fach größer ist als die mit 0,05 bis 0,15-
facher Profiltiefe $(P_T)$ ausgebildete Einschnittbreite $(W_1)$.

2. Fahrzeugluftreifen nach Anspruch 1, dadurch gekennzeichnet, daß
die Erweiterungstiefe (x) der Öffnung (6) im Bereich der 0,9 bis
0,1-fachen Profiltiefe $(P_T)$ vorliegt.

3. Fahrzeugluftreifen nach Anspruch 1 und 2, dadurch gekennzeichnet,
daß die Öffnung (6) im Querschnitt V-förmig ausgebildet ist.

4. Fahrzeugluftreifen nach Anspruch 1 bis 3, dadurch gekennzeichnet,
daß die Öffnung (14,17) einseitig erweitert ausgebildet ist.

5. Fahrzeugluftreifen nach Anspruch 1 bis 4, dadurch gekennzeichnet,
daß die Öffnung (6) bogenförmige Wände (11) aufweist.

6. Fahrzeugluftreifen nach Anspruch 5, dadurch gekennzeichnet, daß
der Krümmungsradius (R) mit 0,2 bis 1000-facher Größe der Profiltiefe $(P_T)$ vorliegt.

7. Fahrzeugluftreifen nach Anspruch 1 bis 6, dadurch gekennzeichnet, daß sich die Öffnung (9) des Querschnitts über die gesamte Einschnittiefe ($E_T$) erstreckt.

8. Fahrzeugluftreifen nach Anspruch 1 bis 7, dadurch gekennzeichnet, daß die Öffnung (6) teilweise über die Länge (L) des Lamellenfeineinschnitts (5) ausgebildet vorliegt.

1/1

0213452

Fig.1

Fig.2

Fig.3 a)    b)

Fig. 3 c)    d)

Fig. 3 e)    f)

Fig.4

P146 EP